# EUROPEAN PATENT APPLICATION

(11) **EP 1 806 745 A1**
(43) Date of publication of application: **11.07.2007**
(21) Application number: 05766250.4
(22) Date of filing: 19.07.2005
(51) Int. Cl.: G11B 7/24

(54) **OPTICAL INFORMATION RECORDING MEDIUM AND PROCESS FOR PRODUCING THE SAME**

(30) Priority: 18.10.2004 JP 2004302590
(71) Applicant: MATSUSHITA ELECTRIC INDUSTRIAL CO., LTD., Osaka 571-8501 (JP)
(72) Inventor: HABUTA, Haruhiko Matsushita Electric Ind. Co.,Ltd., Chuo-ku Osaka-shi, Osaka 540-6319 (JP); KITAURA, Hideki Matsushita Electric Ind. Co.,Ltd., Chuo-ku Osaka-shi, Osaka 540-6319 (JP)
(74) Representative: Eisenführ, Speiser & Partner
(86) International application number: PCT/JP2005/013243
(87) International publication number: WO 2006/043357

(57) **Abstract**

An optical information recording medium having a plurality of information layers, with which stable recording and reproduction can be achieved in all information layers, and good recording sensitivity can be maintained in the innermost layer when viewed from the laser incidence side, as well as a method for manufacturing such medium are provided. To this end, the present invention is an optical information recording medium comprising a first information layer, an intermediate layer, and a second information layer, in that order, on a substrate, wherein both of the information layers have a recording layer composed of a material containing Te, O, and M (where M is one or more elements selected from among Al, Si, Ti, V, Cr, Mn, Fe, Co, Ni, Cu, Zn, Ga, Ge, Zr, Nb, Mo, Ru, Rh, Pd, Ag, In, Sn, Sb, Hf, Ta, W, Re, Os, Ir, Pt, Au, and Bi), and the second information layer contains the material M in a higher compositional ratio than does the first information layer.

## Description

### TECHNICAL FIELD

The present invention relates to an optical information recording medium with which information signals are recorded and reproduced by irradiating a substrate with a laser beam or other such high-energy light beam, and to a method for manufacturing the medium.

### BACKGROUND ART

Phase-change recording media are known as media that allow large volumes of information to be recorded and reproduced at high speed. These media take advantage of the fact that the heat produced when a recording material is locally irradiated with laser light causes the recording material to change into different states that are optically distinct. A phase-change recording medium can be randomly accessed as necessary, and is also very portable, and these significant advantages have led to the increasing importance of these media in recent years. For instance, demand is growing in the recording and storage of personal data, graphic information, and the like through a computer, as well as in many different fields, such as the medical field, the academic field, and the changeover from consumer video tape recorders. Today, along with the need for higher performance with image information and applications, phase-change recording media also need to have higher capacity, density, and speed.
Types of media based on this recording and reproduction principle that have been proposed in the past include a rewritable type that allows information to be rewritten numerous times, and a write-once type that allows information to be written only one time. Since a write-once medium generally entails fewer layers than a rewritable type, it is easier and less costly to manufacture. Also, since it cannot be rewritten, it is suitable for writing data that the user does not want to be destroyed. Furthermore, because of its long shelf life and high reliability, this type of medium is expected to be in high demand for archival applications. Accordingly, even as high-density rewritable media continue to gain in popularity, the demand for high-density write-once media is likely to continue increasing as well.
A number of oxide materials have been proposed in the past as write-once recording materials. For example, it has been disclosed that a recording material in which tellurium particles are dispersed in an oxide matrix, such as GeO₂, TeO₂, SiO₂, Sb₂O₃, or SnO₂, give a large signal amplitude and high sensitivity (see Patent Document 1, for example). For instance, it is known that a recording material whose main component is Te-O-Pd results in a large signal amplitude and has extremely high reliability (see Patent Document 2, for example). The recording mechanism of these Te-O-Pd-based recording materials is believed to be as follows. After being formed, a Te-O-Pd film is a composite material in which Te-Pd, or tellurium, or palladium is uniformly dispersed as microparticles in TeO₂. Upon irradiation with laser light, the material melts and the tellurium, Te-Pd, or palladium precipitates as larger crystal particles, so there is a change in the optical state, and this difference can be detected as a signal. Also, a material whose main component is Te-O-Pd has substantially transparent TeO₂ as its matrix, so it is easy to achieve high transmissivity in the film, and an advantage is that this material can also be applied to multilayer optical information media with which information has to be recorded to multiple layers by irradiating with laser light from one side of the medium.
One of the most important issues involved in obtaining a practical write-once recording medium using the above-mentioned TeOₓ-based recording material is that when a recorded signal is reproduced, the signal amplitude gradually increases (hereinafter referred to as relaxation). This relaxation can be reduced by adding a material M (where M is one or more elements selected from among Al, Si, Ti, V, Cr, Mn, Fe, Co, Ni, Cu, Zn, Ga, Ge, Zr, Nb, Mo, Ru, Rh, Pd, Ag, In, Sn, Sb, Hf, Ta, W, Re, Os, Ir, Pt, Au, and Bi) to the TeOₓ (refereed to like Te-O-M).
However, with a Te-O-Pd film of an information layer close to the laser incidence side in a recording medium composed of two layers, the recording layer has to be made thinner than those further to the inside in order to obtain high transmissivity, and as a result, more relaxation occurs than with a write-once type of recording medium having just one information layer. The reason for this is believed to be that because the recording layer is thin in an information layer close to the laser incidence side, there is less palladium that can serve as a point of origin for crystallization, so there ends up being more tellurium that is not bonded to palladium. This extra tellurium affects relaxation, which is why more relaxation is seen in an information layer close to the laser incidence side. In the practical use of a medium, it is undesirable if some layers have a stable signal amplitude while other layers have a signal amplitude that varies in the midst of reproduction. Also, with a write-once type of recording medium having three or more information layers, the recording layer used in an information layer close to the laser incidence side has to be made even thinner, which means that even more relaxation will be seen.
Also, the information layer that is farthest from the laser incidence side in a recording medium composed of two layers needs to have high recording sensitivity in order to record and reproduce information through the information layer closest to the laser incidence side. Recording sensitivity varies with the palladium content in a Te-O-Pd film, and the higher the palladium content, the worse is the recording sensitivity. In view of this, the information layer that is farthest from the laser incidence side preferably has the lowest palladium content in the Te-O-Pd film. Also, with a recording medium having three or more information layers, the information layer that is farthest from the laser incidence side needs to have the highest recording sensitivity, so this layer preferably has the lowest palladium content, just as with a two-layer medium.
Patent Document 1: Japanese Unexamined Patent Publication S58-54338
Patent Document 2: International Unexamined Patent Publication WO98/09823

### DISCLOSURE OF THE INVENTION

It is an object of the present invention to solve the above-mentioned problems and to provide an optical information recording medium having a plurality of information layers, with which stable recording and reproduction can be achieved in all information layers, and good recording sensitivity can be maintained in the innermost layer when viewed from the laser incidence side, as well as a method for manufacturing this medium.
As the means for solving the above-mentioned problems, the present invention is an optical information recording medium, comprising a first information layer, an intermediate layer, and a second information layer, in that order, on a substrate, with which the recording and reproduction of information are performed by causing laser light to be incident from the second information layer side, wherein both of the information-layers have a recording layer composed of a material containing Te, O, and M (where M is one or more elements selected from among Al, Si, Ti, V, Cr, Mn, Fe, Co, Ni, Cu, Zn, Ga, Ge, Zr, Nb, Mo, Ru, Rh, Pd, Ag, In, Sn, Sb, Hf, Ta, W, Re, Os, Ir, Pt, Au, and Bi), and M₂ > M₁ is satisfied, where M₁ is the compositional ratio of the material M in the first information layer, and M₂ is the compositional ratio of the material M in the second information layer.
This allows stable recording and reproduction characteristics to be obtained in each layer of a two-layer medium.
It is preferable here, in terms of obtaining even better recording characteristics, if the recording layers each contain the material M in an amount of at least 1 atom% and no more than 30 atom%.
It is also preferable, in terms of obtaining even better recording characteristics, if the thickness of the recording layers is at least 1 nm and no more than 50 nm.
It is preferable if at least one of the first and second information layers has a protective layer on the substrate side of the recording layer and/or the opposite side from the substrate side.
This allows even better recording characteristics to be obtained.
It is preferable here if the material of the protective layer is ZnS, at least one oxide selected from among Si-O, Al-O, Ti-O, Ta-O, Zr-O, and Cr-O, at least one nitride selected from among Ge-N, Cr-N, Si-N, Al-N, Nb-N, Mo-N, Ti-N, and Zr-N, at least one carbide selected from among Ge-C, Cr-C, Si-C, Al-C, Ti-C, Zr-C, and Ta-C, at least one fluoride selected from among Si-F, Al-F, Mg-F, Ca-F, and La-F, or a combination of these (such as ZnS-SiO₂).
This allows even better recording characteristics to be obtained.
It is also preferable, in terms of obtaining even better recording characteristics, if the thickness of the protective layers is at least 3 nm and no more than 50 nm.
It is also preferable, in terms of obtaining even better recording characteristics, if at least one of the first and second information layers has a reflective layer on the substrate side of the recording layer.
It is preferable here if the reflective layer is composed of a material whose main component is at least one element selected from among Ag, Al, Au, Si, Cu, Ni, Cr, and Ti.
This allows even better recording characteristics to be obtained.
It is also preferable, in terms of obtaining even better recording characteristics, if the thickness of the reflective layer is at least 3 nm and no more than 200 nm.
The present invention is also an optical information recording medium, comprising a first information layer, a second information layer,..., and an n-th information layer (where n is an integer of 3 or greater), in that order, on a substrate, with each of these separated by an intermediate layer, with which the recording and reproduction of information are performed by causing laser light to be incident from the n-th information layer side, wherein all of the information layers have a recording layer composed of a material containing Te, O, and M (where M is one or more elements selected from among Al, Si, Ti, V, Cr, Mn, Fe, Co, Ni, Cu, Zn, Ga, Ge, Zr, Nb, Mo, Ru, Rh, Pd, Ag, In, Sn, Sb, Hf, Ta, W, Re, Os, Ir, Pt, Au, and Bi), and Mₙ ≥ ... ≥ M₂ ≥ M₁ and M₁ ≠ Mₙ are satisfied, where M₁ is the compositional ratio of the material M in the first information layer, M₂ is the compositional ratio of the material M in the second information layer, ..., and Mₙ is the compositional ratio of the material M in the n-th information layer.
This allows stable recording and reproduction characteristics to be obtained in each layer of a multilayer medium.
It is preferable here if the recording layers each contain the material M in an amount of at least 1 atom% and no more than 30 atom%.
It is also preferable, in terms of obtaining even better recording characteristics, if the thickness of the recording layers is at least 1 nm and no more than 50 nm.
It is preferable if at least one of the first to n-th information layers has a protective layer on the substrate side of the recording layer and/or the opposite side from the substrate side, and the protective layer is composed of a material with a refractive index n of at least 1.5.
This allows even better recording characteristics to be obtained.
It is preferable if at least one of the first to n-th information layers has a reflective layer on the substrate side of the recording layer, and if the reflective layer is composed of a material whose refractive index n is no more than 2 and whose extinction coefficient k is at least 2.
This allows even better recording characteristics to be obtained.
Also, it is preferable if annealing in which the temperature is held at 60°C or higher for at least 5 minutes is performed after the formation of an information recording medium produced using the manufacturing method described above.
This allows even better recording characteristics to be obtained.
As discussed above, the present invention provides an optical information recording medium having a plurality of information layers, with which stable recording and reproduction can be achieved in all information layers, as well as a method for manufacturing this medium.

### BRIEF DESCRIPTION OF THE DRAWINGS

FIG. 1 is a cross-sectional diagram illustrating an example of the structure of the optical information recording medium of the present invention;
FIG. 2 is a cross-sectional diagram illustrating an example of the structure of the optical information recording medium of the present invention; and
FIG. 3 is a diagram illustrating the structure of a recording and reproduction apparatus for the optical information recording medium of the present invention.

### NUMERICAL REFERENCE

- 1, 8: substrate
- 2, 9: first information layer
- 3, 10: intermediate layer
- 4, 11: second information layer
- 5, 13: optically transparent layer
- 6, 14, 16,: laser light
- 7, 15, 21: optical information recording medium
- 12: n-th information layer
- 17: objective lens
- 18: semiconductor laser
- 19: optical head
- 20: spindle motor
- 22: recording and reproduction apparatus
- 201, 401, 901: reflective layer
- 202, 204, 402, 404, 902, 1101, 1103, 1201, 1203: protective layer
- 203, 403, 903, 1102, 1202: recording layer

### DESCRIPTION OF THE PREFERRED EMBODIMENT

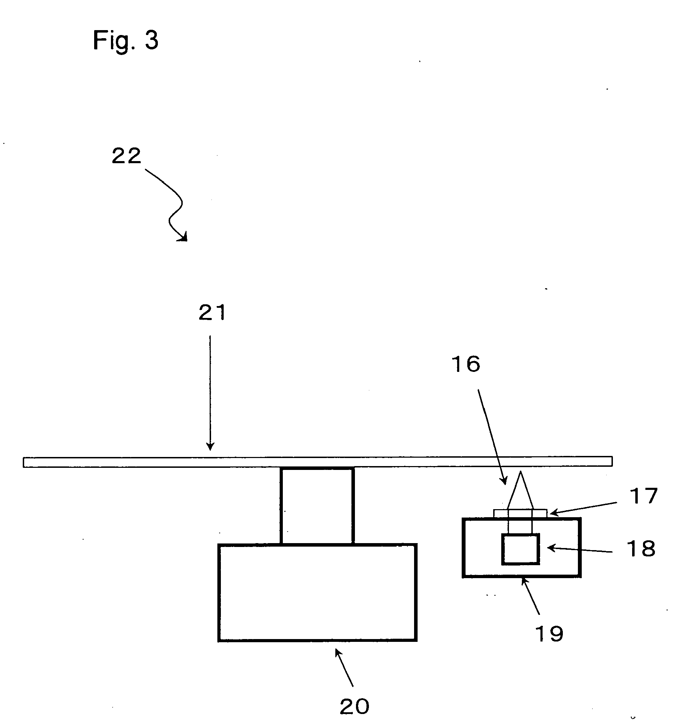

An embodiment of the present invention will now be described through reference to the drawings. The following embodiments are merely examples, and the present invention is not limited to or by them. Also, in the following embodiments, those components that are the same will be numbered the same, and redundant descriptions may be omitted.

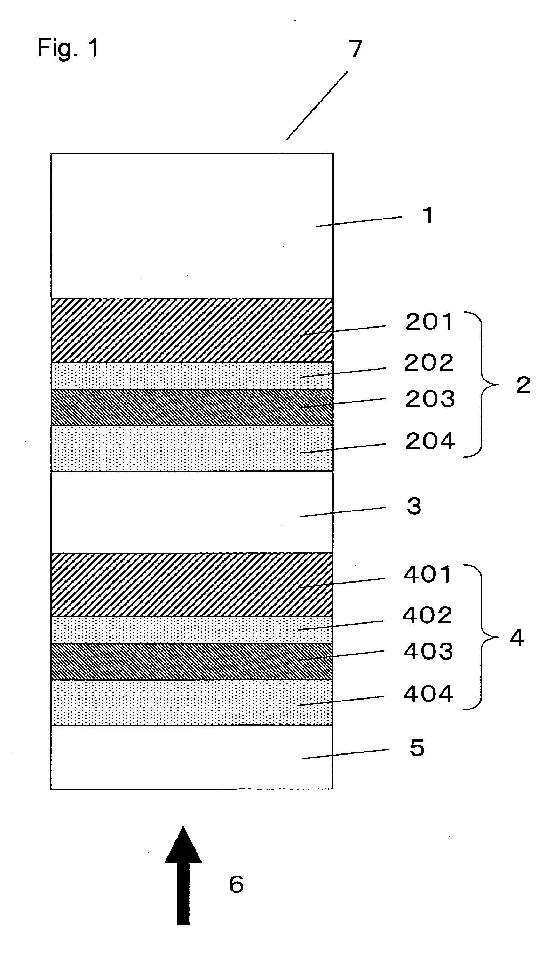

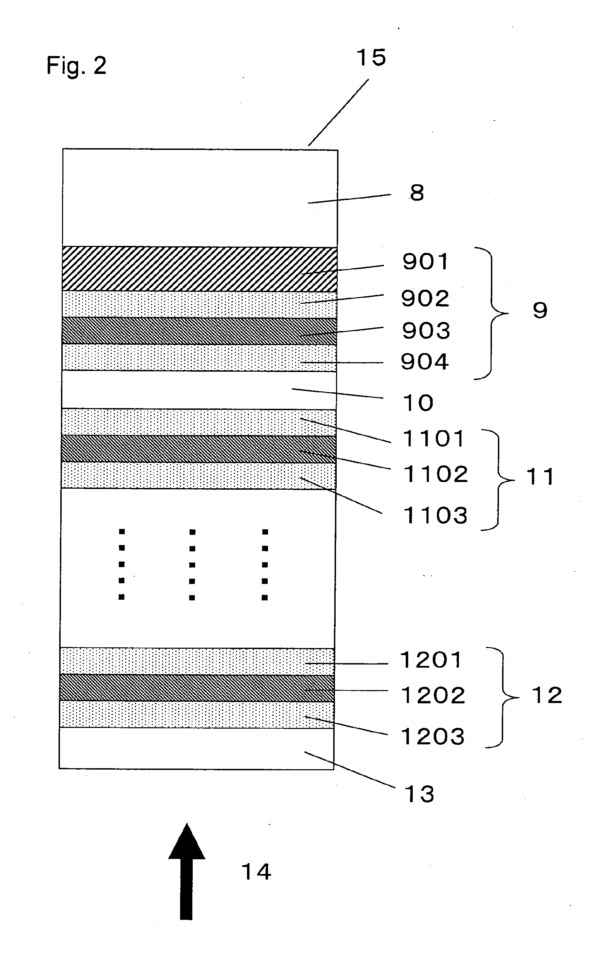

FIGS. 1 and 2 are examples of the structure of the optical information recording medium of the present invention.
As shown in FIG. 1, an optical information recording medium 7 of the present invention comprises a substrate 1 over which are provided a first information layer 2 and a second information layer 4, in that order. An intermediate layer 3 is interposed between the two information layers, thereby optically separating the information layers from each other and eliminating unnecessary optical interference. Further, a optically transparent layer 5 is formed over the second information layer. Recording and reproduction are performed with this optical information recording medium by irradiating it with laser light 6 from the optically transparent layer 5 side.
As shown in FIG. 2, an optical information recording medium 15 of the present invention may comprise a substrate 8 over which are provided a first information layer 9, a second information layer 11, ..., and an n-th information layer 12, in that order. Just as in FIG. 1, an intermediate layer 10 is interposed between each pair of information layers, thereby optically separating the information layers from each other and eliminating unnecessary optical interference. Recording and reproduction are performed with this optical information recording medium 15 by irradiating it with laser light 14 from the optically transparent layer 13 side. Each of the first to n-th information layers has a recording layer. In addition to the recording layer, a protective layer composed of a dielectric material, or a reflective layer composed of an alloy material or the like, can also be provided.
The substrates 1 and 8 and the optically, transparent layers 5 and 13 are protective materials whose purpose is to protect the optical information recording medium from scratches or oxidation. Recording and reproduction are performed by passing laser light through the optically transparent layer 5 or 13, so this layer is made from a material that is transparent to laser light, or a material that absorbs only a negligible amount of light (light absorption of 10% or less, for example).
Examples of materials that can be used for the substrates 1 and 8 and the optically transparent layers 5 and 13 include such as polycarbonate, polymethyl methacrylate, polyolefin-based resins, and various other resins, and glass.
The optically transparent layers 5 and 13 may be a substrate produced in the desired shape by molding or the like, or may be a sheet material that has been worked into the desired shape. Alternatively, a UV-setting resin that is transparent to the laser light used in recording and reproduction may be used. The phrase "optically transparent layers 5 and 13" used here refers to the entire transparent layer produced on the laser incidence side as viewed from the protective layer 204 or 1203 (discussed below). For instance, when transparent sheets are stuck together with a transparent UV-setting resin, these are collectively referred to as the optically transparent layer 5 or 13.
It is preferable for guide grooves or pits for guiding the laser light to be formed in the optically transparent layer 5 or 13 and/or the substrate 1 or 8 on the side where the information layer is located.
The intermediate layers 3 and 10 are layers provided to optically separate the first and second information layers, or the first to n-th information layers, and are composed of a material that is transparent to laser light. More specifically, a UV-setting resin or the like can be used. The intermediate layers 3 and 10 should be thick enough to be able to separate the information layers, and the thickness should be such that the information layers can be converged by the objective lens. When three or more information layers are laminated, the intermediate layers preferably have mutually different thicknesses. This is because if the intermediate layers all have the same thickness, the information layers will be positioned at regular intervals, so when an inner layer is used in recording or reproduction, the laser light may be focused on a layer located two layers ahead, which means that there is a possibility of increased crosstalk.
The recording layers 203, 403, 903, 1102, and 1202 are made of a material whose optical characteristics can move between two more states. The material of the recording layer is preferably one that is capable of reversibly changing between these different states, and a material whose main components are tellurium, oxygen, and M (where M is one of the elements listed above) is favorable. "Main component" as used here means one or more components accounting for more than 80 atom%, and when there are two or more main components, the total amount of these components may be 80 atom% or higher. Preferred examples of the element M include palladium and gold. Adding palladium and/or gold makes it easier to achieve a sufficient crystallization rate and high environmental reliability. This material preferably has a composition containing at least 30 atom% and no more than 70 atom% oxygen atoms, and at least 1 atom% and no more than 30 atom% M atoms. A composition containing at least 5 atom% M atoms is even better.
If the content of oxygen atoms is less than 30 atom%, the thermal conductivity of the recording layer will be too high and the recording marks may be too large. This tends to prevent the C/N ratio from increasing even when the recording power is raised. On the other hand, if the oxygen atom content is over 70 atom%, the recording marks may not be large enough even when the recording power is raised. Consequently, it is difficult to achieve a high C/N ratio and high recording sensitivity.
If the M atom content is less than 1 atom%, the crystallization produced by forming a compound with tellurium during laser light irradiation will proceed relatively slowly, so the crystallization rate of the recording layer 2 may be inadequate. This can prevent marks from being formed at high speed. A composition containing at least 5% M atoms is preferable because the crystallization rate will be higher and stable marks can be formed. On the other hand, if the M atom content is over 30 atom%, there may be less change in reflectance between amorphous and crystalline states, resulting in a lower C/N ratio.
The recording layer may include elements other than tellurium, oxygen, and M. For instance, one or more elements selected from among sulfur, nitrogen, fluorine, boron, and carbon may be added for the purpose of adjusting the thermal conductivity or optical constant, improving heat resistance and environmental reliability, and so forth. These added elements are preferably contained in an amount of no more than 20 atom% in the overall recording layer.
The thickness of the recording layer is preferably at least 2 nm and no more than 70 nm. The reason for this is to make it easier to obtain a satisfactory C/N ratio. If the film thickness is less than 2 nm, satisfactory reflectivity and reflectivity change will not be obtained, so the C/N ratio may be too low. In this respect it is even better for the recording layer to be at least 5 nm thick. On the other hand, if the film thickness is over 70 nm, there will be more diffusion of heat within the thin-film plane of the recording layer, and there is the possibility that this will result in a lower C/N ratio in high-density recording.
With a recording medium composed of two layers, the present invention relates to an optical information recording medium comprising a first information layer, an intermediate layer, and a second information layer, in that order, on a substrate, with which the recording and reproduction of information are performed by causing laser light to be incident from the second information layer side, wherein both of the information layers have a recording layer composed of a material containing Te, O, and M (where M is one or more elements selected from among Al, Si, Ti, V, Cr, Mn, Fe, Co, Ni, Cu, Zn, Ga, Ge, Zr, Nb, Mo, Ru, Rh, Pd, Ag, In, Sn, Sb, Hf, Ta, W, Re, Os, Ir, Pt, Au, and Bi), and M₂ > M₁ is satisfied, where M₁ is the compositional ratio of the material M in the first information layer, and M₂ is the compositional ratio of the material M in the second information layer. This allows stable recording and reproduction characteristics to be obtained in each layer of a two-layer medium. It is preferable for M₂ to be at least 1 atom% greater than M₁. Also, it is preferable for M₂ to be at least 2 atom%, and even more preferably at least 4 atom%, greater than M₁.
With a recording medium composed of at least three layers, the present invention relates to an optical information recording medium, comprising a first information layer, a second information layer,..., and an n-th information layer (where n is an integer of 3 or greater), in that order, on a substrate, with each of these separated by an intermediate layer, with which the recording and reproduction of information are performed by causing laser light to be incident from the n-th information layer side, wherein all of the information layers have a recording layer composed of a material containing Te, O, and M (where M is one or more elements selected from among Al, Si, Ti, V, Cr, Mn, Fe, Co, Ni, Cu, Zn, Ga, Ge, Zr, Nb, Mo, Ru, Rh, Pd, Ag, In, Sn, Sb, Hf, Ta, W, Re, Os, Ir, Pt, Au, and Bi), and Mₙ ≥ ... ≥ M₂ ≥ M₁ and M₁ ≠ Mₙ are satisfied, where M₁ is the compositional ratio of the material M in the first information layer, M₂ is the compositional ratio of the material M in the second information layer, ..., and Mₙ is the compositional ratio of the material M in the n-th information layer. This allows stable recording and reproduction characteristics to be obtained in each layer of a two-layer medium. It is preferable for Mₖ (1 ≤ k < n) to be at least 1 atom% greater than Mₖ₋₁. Also, it is preferable for Mₖ to be at least 2 atom%, and even more preferably at least 4 atom%, greater than Mₖ₋₁.
The reflective layers 201, 401, and 901 are formed from gold, silver, copper, aluminum, nickel, chromium, titanium, or another such metal, or an alloy of suitably selected metals. The reflective layers 201, 401, and 901 are provided for the purpose of obtaining an optical effect, such as effective optical absorption in the recording layer, or a heat dissipation effect. The thickness thereof is preferably at least 1 nm. This is because if the reflective layers 201, 401, and 901 are less than 1 nm thick, it will be difficult to achieve a uniform layer-like state, and the thermal and optical effects will be diminished. In the structure shown in FIG. 2, only the first information layer 9 has the reflective layer 901, but any or all of the first to n-th information layers may have a reflective layer, and the first information layer need not have the reflective layer 901. In general, the transmissivity of the information layer will decrease if the reflective layer 901 is provided, but high signal quality can be easily obtained because of the heat dissipation effect and optical effect discussed above. Accordingly, the second to n-th information layers located on the side where the laser light is incidence must be appropriately designed in terms of whether or not a reflective layer is provided, and when a reflective layer is provided, the high transmissivity of the information layer must be maintained by keeping this reflective layer extremely thin, such as 10 nm or less. The preferred ranges of n and k are no more than 2.0 and at least 2.0, respectively.
The protective layers 202, 204, 402, 404, 902, 1101, 1103, 1201, and 1203 are provided mainly for the purpose of projecting the recording material and adjusting the optical characteristics so that effective optical absorption will be possible at the information layer. The protective layer can be made from a material whose refractive index n is at least 1.5, and preferably at least 2.0, and even more preferably at least 2.5. More specifically, the material is selected such that the above-mentioned objective can be achieved, and examples of such materials include sulfides such as ZnS, selenides such as ZnSe, oxides such as Si-O, Al-O, Ti-O, Ta-O, Zr-O, and Cr-O, nitrides such as Ge-N, Cr-N, Si-N, Al-N, Nb-N, Mo-N, Ti-N, and Zr-N, oxynitrides such as Ge-O-N, Cr-O-N, Si-O-N, Al-O-N, Nb-O-N, Mo-O-N, Ti-O-N, Zr-O-N, and Ta-O-N, carbides such as Ge-C, Cr-C, Si-C, Al-C, Ti-C, Zr-C, and Ta-C, fluorides such as Si-F, Al-F, Ca-F, and La-F, other dielectric materials and combinations of these (such as ZnS-SiO₂).
The optical information recording medium of the present invention may be provided with an additional information layer besides the first information layer 2, second information layer 4, and n-th information layer 12 having recording layers composed of a material whose main components are tellurium, oxygen, and M. For example, this may be an information layer having a recording layer composed of a material different from the material whose main components are tellurium, oxygen, and M, and it can be an information layer that is either a rewritable type, or a read-only type, not a write-once type, and can be added at any location desired.
It is also possible to employ a two-sided structure in which two of the above-mentioned optical information recording mediums are applied facing each other, one each on the substrates 1 and 8, which allows the quantity of information that can be stored per medium to be doubled.
The above-mentioned thin-films can be formed, for example, by vacuum vapor deposition, sputtering, ion plating, CVD (Chemical Vapor Deposition), MBE (Molecular Beam Epitaxy), or other such vapor phase thin-film deposition method.
As to the procedure for producing each layer, in the case of FIG. 1, everything up to the protective layer 204 is formed in order from the reflective layer 201 side on the substrate 1, and a groove pattern is transferred to the intermediate layer, after which the second information layer is formed in the same manner. The optically transparent layer 5 may be formed either by sticking a medium produced up to the protective layer 404 together with a base material having an adhesive resin on one side, or by using a UV resin to stick a medium produced up to the protective layer 404 together with a sheet-form base material, or by forming the layer 5 by a UV-setting resin on a medium produced up to the protective layer 404.
If the optical information recording medium of the present invention undergoes an annealing step for at least a specific length of time under high-temperature conditions, the resulting C/N ratio will be even higher and the jitter value lower. The reason for this is believed to be that the annealing step forms microscopic crystal nuclei when some of the atoms randomly diffused in the recording layer 2 are suitably bonded, so crystallization proceeds more smoothly in recording, which results in mark edges that are aligned better, and allows the marks to be formed in a more uniform shape.
The annealing temperature will vary with the composition of the recording layer, but the inventors confirmed by experimentation that this temperature is at least 60°C, and is a temperature at which the transparent substrate will not melt, specifically, below the softening point or melting point thereof, and in the case of a polycarbonate, for example, the temperature is preferably 120°C or lower. The annealing time will vary with the recording layer composition and the annealing temperature, but experiments conducted by the inventors revealed that at least 5 minutes is necessary for the effects of increasing the C/N ratio and so forth to be fully realized. Annealing may be continued for even longer, but basically no difference is seen in recording and reproduction characteristics when annealing is continued beyond the above point.
Next, an example of a method for recording and reproduction with an optical information recording medium formed as above will be described. FIG. 3 illustrates in simplified form an example of the apparatus used for recording and reproduction when the optical information recording medium is an optical disk. Units used in the recording and reproduction of signals are a semiconductor laser 18, an optical head 19 on which an objective lens 17 is mounted, a drive apparatus (not shown) for guiding laser light to the required position to be irradiated, a tracking control apparatus and focusing control apparatus (not shown) for controlling the position in the track direction and the direction perpendicular to the film plane, a laser drive apparatus (not shown) for modulating laser power, and a spindle motor 20 for rotating the medium.
The recording and reproduction of signals are performed by first rotating the medium with the spindle motor 20, and using an optical system to focus the laser light to a tiny spot and irradiate the medium with laser light. In the reproduction of a signal, the medium is irradiated with a laser beam whose power level is lower than in the recording of a signal, so that the optical state of the recording marks will not be affected by laser irradiation at this power level, and enough light will be obtained to reproduce the recording marks from the medium by this irradiation, and the signal thus obtained from the medium is read by a detector.

### Examples

The present invention will now be described in more specific terms through examples, but is not limited by the following examples.

### Example 1

Here we will describe an example of producing an optical information recording medium having the layer structure shown in FIG. 1. A polycarbonate resin was used for the substrate. The substrate was 12 cm in diameter and 1.1 mm thick, and had a groove pitch of 0.32 µm and a groove depth of 20 nm.
On the surface of the substrate, on the side with the grooves, were formed as a first information layer an Al-Ni reflective layer with a thickness of approximately 40 nm using an Al-Ni (atomic number ratio: 98:2) target, a ZnS-SiO₂ protective layer with a thickness of approximately 15 nm using a ZnS-SiO₂ (molecular number ratio: 80:20) target, a Te-O-Pd recording layer with a thickness of approximately 25 nm using a Te-O-Pd (atomic number ratio: 35:60:5) target, and a ZnS-SiO₂ protective layer with a thickness of approximately 6 nm using a ZnS-SiO₂ (molecular number ratio: 80:20) target, in the above order, by sputtering. The same groove pattern as in the substrate was transferred onto the surface of this first information layer using a UV-setting resin, and an intermediate layer with a thickness of approximately 25 um was formed.
On the surface of this intermediate layer were formed as a second information layer an AgPdCu reflective layer with a thickness of approximately 10 nm using an AgPdCu (weight ratio: 98.1:0.9:1.0) target, a ZnS-SiO₂-Cr₂O3-LaF₃ protective layer (molecular number ratio: 23:23:31:23) target, a Te-O-Pd recording layer with a thickness of approximately 25 nm using a Te-O-Pd (atomic number ratio: varies with sample) target, and a ZnS-SiO₂ protective layer with a thickness of approximately 23 nm using a ZnS-SiO₂ (molecular number ratio: 80:20) target, in the above order, by sputtering. A UV-setting resin was used to stick a sheet of polycarbonate over the surface of this second information layer and obtain a transparent substrate with a thickness of 75 µm.
Each of the layers was formed using a target 100 mm in diameter and about 6 mm thick, the reflective layers were formed with a 200 W DC power supply, the protective layers with a 400 W RF power supply, and the recording layers with a 100 W RF power supply. The layers were formed in an atmosphere held at a gas pressure of approximately 0.2 Pa, using 25 sccm argon for the reflective layers and protective layers, and 25 sccm argon and 0.5 sccm oxygen for the recording layers. The disk was completed by annealing for about 2 hours at 90°C.
The target composition used in the recording layer of an information layer was adjusted here as shown in Table 1 below to produce a disk A as this example and disks B, C, and D as comparative examples. With disk A, the palladium content of the second information layer was made greater than that of the first information layer. In contrast, with disk B, the palladium content was the same in the first information layer and second information layer, and with disks C and D the palladium content of the first information layer was made greater than that of the second information layer.

**Table 1**

| Disk | Information layer | Target composition Te:O:Pd | Relaxation occurred? | Recording sensitivity of first information layer | Evaluation |
|---|---|---|---|---|---|
| A | 1^{st} information layer | 37:53:10 | no | good | good |
| | 2^{nd} information layer | 40:45:15 | no | | |
| B | 1^{st} information layer | 37:53:10 | no | poor | poor |
| | 2^{nd} information layer | 37:53:10 | no | | |
| C | 1^{st} information layer | 37:53:10 | no | good | poor |
| | 2^{nd} information layer | 35:60:5 | yes | | |
| D | 1^{st} information layer | 40:45:15 | no | poor | poor |
| | 2^{nd} information layer | 37:53:10 | no | | |

A single signal of 12.3 MHz was recorded one time to an unrecorded track (in the grooves of each information layer of the disk) while each disk was rotated at a linear velocity of 5.0 m/s, using an optical system with a NA of 0.85 at a wavelength of 405 nm, and the signal amplitude was measured with a spectral analyzer. One minute after the signal had been recorded, the signal amplitude was checked to see if it had increased (relaxed) in the midst of reproduction. It was deemed that relaxation had occurred if the signal amplitude had increased by at least 3 dB. The recording sensitivity was the power level at which the best jitter value was obtained when random signals were recorded to five contiguous tracks and the middle track was reproduced.
The measurement results in Table 1 reveal that no relaxation occurred in either the first or second information layer with disk A, and recording sensitivity was good. On the other hand, with disk B, in which the palladium content was the same in both the first and second information layers, no relaxation was seen, but the recording sensitivity of the first information layer worsened. With disk C, in which the palladium content of the first information layer was the same as in disk A, and the palladium content of the second information layer was less than that of the first information layer, relaxation was seen in the second information layer. With disk D, in which the compositions of the first and second information layers were reversed from those of disk A, no relaxation was seen in either layer, but the recording sensitivity of the first information layer worsened.
Thus, when the second information layer contains more palladium than the first information layer as in the present invention, it is possible to provide an optical information recording medium with which recording and reproduction can be performed stably in two information layers, and good recording sensitivity can be maintained in the innermost layer as viewed from the laser incidence side.

### Example 2

Here we will describe an example of producing an optical information recording medium having the layer structure shown in FIG. 2 (where n = 4). A polycarbonate resin was used for the substrate. The substrate was 12 cm in diameter and 1.1 mm thick, and had a groove pitch of 0.32 µm and a groove depth of 20 nm.
On the surface of the substrate, on the side with the grooves, were formed as a first information layer an Al-Ni reflective layer with a thickness of approximately 40 nm using an Al-Ni (atomic number ratio: 98:2) target, a ZnS-SiO₂ protective layer with a thickness of approximately 15 nm using a ZnS-SiO₂ (molecular number ratio: 80:20) target, a Te-O-Pd recording layer with a thickness of approximately 25 nm using a Te-O-Pd (atomic number ratio: 35:60:5) target, and a ZnS-SiO₂ protective layer with a thickness of approximately 6 nm using a ZnS-SiO₂ (molecular number ratio: 80:20) target, in the above order, by sputtering. The same groove pattern as in the substrate was transferred onto the surface of this first information layer using a UV-setting resin, and an intermediate layer with a thickness of approximately 13 µm was formed.
On the surface of this intermediate layer were formed as a second information layer a Zn-S protective layer with a thickness of approximately 15 nm using a Zn-S (atomic number ratio: 50:50) target, a Te-O-Pd recording layer with a thickness of approximately 10 nm using a Te-O-Pd (atomic number ratio: varies with sample) target, and a Zn-S protective layer with a thickness of approximately 20 nm using a Zn-S (atomic number ratio: 50:50) target, in the above order, by sputtering. The same groove pattern as in the substrate was transferred onto the surface of this second information layer using a UV-setting resin, and an intermediate layer with a thickness of approximately 13 µm was formed.
On the surface of this intermediate layer were formed as a third information layer a Zn-S protective layer with a thickness of approximately 20 nm using a Zn-S (atomic number ratio: 50:50) target, a Te-O-Pd recording layer with a thickness of approximately 8 nm using a Te-O-Pd (atomic number ratio: varies with sample) target, and a Zn-S protective layer with a thickness of approximately 30 nm using a Zn-S (atomic number ratio: 50:50) target, in the above order, by sputtering. The same groove pattern as in the substrate was transferred onto the surface of this third information layer using a UV-setting resin, and an intermediate layer with a thickness of approximately 13 µm was formed.
On the surface of this intermediate layer were formed as a fourth information layer a Zn-S protective layer with a thickness of approximately 25 nm using a Zn-S (atomic number ratio: 50:50) target, a Te-O-Pd recording layer with a thickness of approximately 6 nm using a Te-O-Pd (atomic number ratio: varies with sample) target, and a Zn-S protective layer with a thickness of approximately 30 nm using a Zn-S (atomic number ratio: 50:50) target, in the above order, by sputtering. A UV-setting resin was used to stick a sheet of polycarbonate over the surface of this fourth information layer and obtain a transparent substrate with a thickness of 60 µm.
Each of the layers was formed using a target 100 mm in diameter and about 6 mm thick, the reflective layers were formed with a 200 W DC power supply, the protective layers with a 400 W RF power supply, and the recording layers with a 100 W RF power supply. The layers were formed in an atmosphere held at a gas pressure of approximately 0.2 Pa, using 25 sccm argon for the reflective layers and protective layers, and 25 sccm argon and 0.5 sccm oxygen for the recording layers. The disk was completed by annealing for about 2 hours at 90°C.
The target composition used in the recording layer of an information layer was adjusted here as shown in Table 2 below to produce disks E and F as examples and disks G, H, and I as comparative examples. With disks E and F, the palladium content was highest in the fourth information layer (the information layer closest to the substrate), and the palladium content was lowest in the first information layer (the information layer farthest from the substrate). In contrast, with disk G, the palladium content was the same in all the information layers, and with disks H and I the palladium content of the first information layer was made greater than that of the fourth information layer.

**Table 2**

| Disk | Information layer | Target composition Te:O:Pd | Relaxation occurred? | Recording sensitivity of first information layer | Evaluation |
|---|---|---|---|---|---|
| E | 1^{st} information layer | 35:60:5 | no | good | good |
| | 2^{nd} information layer | 37:53:10 | no | | |
| | 3^{rd} information layer | 37:53:10 | no | | |
| | 4^{th} information layer | 40:45:15 | no | | |
| F | 1^{st} information layer | 37:53:10 | no | good | good |
| | 2^{nd} information layer | 37:53:10 | no | | |
| | 3^{rd} information layer | 40:45:15 | no | | |
| | 4^{th} information layer | 40:45:15 | no | | |
| G | 1^{st} information layer | 37:53:10 | no | poor | poor |
| | 2^{nd} information layer | 37:53:10 | no | | |
| | 3^{rd} information layer | 37:53:10 | no | | |
| | 4^{th} information layer | 37:53:10 | no | | |
| H | 1^{st} information layer | 40:45:15 | no | poor | poor |
| | 2^{nd} information layer | 40:45:15 | no | | |
| | 3^{rd} information layer | 37:53:10 | no | | |
| | 4^{th} information layer | 37:53:10 | no | | |
| I | 1^{st} information layer | 37:53:10 | no | good | poor |
| | 2^{nd} information layer | 37:53:10 | no | | |
| | 3^{rd} information layer | 35:60:5 | yes | | |
| | 4^{th} information layer | 35:60:5 | yes | | |

The measurements for these disks were made in the same manner as in Example 1.
The measurement results in Table 2 reveal that no relaxation occurred in any of the layers with disks E and F, and recording sensitivity was good. On the other hand, with disk G, in which the palladium content was the same in all the information layers, the recording sensitivity of the first information layer worsened. With disk H, no relaxation was seen, but the recording sensitivity of the first information layer worsened. With disk I, which had the same structure as disk H and the palladium content in all the layers was less than that of the corresponding layers of disk H, conversely, the recording sensitivity of the first information layer was good, but relaxation was seen in the third and fourth information layers.
As discussed above, it was confirmed that if the palladium content of the recording layer in each information layer is increased the closer the layer is to the laser incidence side, then stable recording and reproduction can be performed even in a plurality of information layers, and an optical information recording medium can be provided with which good recording sensitivity can be maintained in the innermost layer when viewed from the laser incidence side.

### INDUSTRIAL APPLICABILITY

The present invention is useful for increasing the stability of the recording and reproduction characteristics of all the information layers in an optical information recording medium having a plurality of information layers, and maintaining good recording sensitivity in the innermost layer when viewed from the laser incidence side.

## Claims

1. An optical information recording medium, comprising a first information layer, an intermediate layer, and a second information layer, in that order, on a substrate, with which the recording and reproduction of information are performed by causing laser light to be incident from the second information layer side,
wherein both of the information layers have a recording layer composed of a material containing Te, O, and M (where M is one or more elements selected from among Al, Si, Ti, V, Cr, Mn, Fe, Co, Ni, Cu, Zn, Ga, Ge, Zr, Nb, Mo, Ru, Rh, Pd, Ag, In, Sn, Sb, Hf, Ta, W, Re, Os, Ir, Pt, Au, and Bi), and
M₂ >M₁
is satisfied, where M₁ is the compositional ratio of the material M in the first information layer, and M₂ is the compositional ratio of the material M in the second information layer.

2. The optical information recording medium according to Claim 1, wherein the recording layers each contain the material M in an amount of at least 1 atom% and no more than 30 atom%.

3. The optical information recording medium according to Claim 1 or 2, wherein the thickness of the recording layers is at least 1 nm and no more than 50 nm.

4. The optical information recording medium according to Claims 1 to 3, wherein at least one of the first and second information layers has a protective layer on the substrate side of the recording layer and/or the opposite side from the substrate side.

5. The optical information recording medium according to Claim 4, wherein the material of the protective layer is ZnS, at least one oxide selected from among Si-O, Al-O, Ti-O, Ta-O, Zr-O, and Cr-O, at least one nitride selected from among Ge-N, Cr-N, Si-N, Al-N, Nb-N, Mo-N, Ti-N, and Zr-N, at least one carbide selected from among Ge-C, Cr-C, Si-C, Al-C, Ti-C, Zr-C, and Ta-C, at least one fluoride selected from among Si-F, Al-F, Mg-F, Ca-F, and La-F, or a combination of these (such as ZnS-SiO₂).

6. The optical information recording medium according to Claim 4 or 5, wherein the thickness of the protective layer is at least 3 nm and no more than 50 nm.

7. The optical information recording medium according to Claims 1 to 6, wherein at least one of the first and second information layers has a reflective layer on the substrate side of the recording layer.

8. The optical information recording medium according to Claim 7, wherein the reflective layer is composed of a material whose main component is at least one element selected from among Ag, Al, Au, Si, Cu, Ni, Cr, and Ti.

9. The optical information recording medium according to Claim 7 or 8, wherein the thickness of the reflective layer is at least 3 nm and no more than 200 nm.

10. An optical information recording medium, comprising a first information layer, a second information layer, ..., and an n-th information layer (where n is an integer of 3 or greater), in that order, on a substrate, with each of these separated by an intermediate layer, with which the recording and reproduction of information are performed by causing laser light to be incident from the n-th information layer side,
wherein all of the information layers have a recording layer composed of a material containing Te, O, and M (where M is one or more elements selected from among Al, Si, Ti, V, Cr, Mn, Fe,Co, Ni, Cu, Zn, Ga, Ge, Zr, Nb, Mo, Ru, Rh, Pd, Ag, In, Sn, Sb, Hf, Ta, W, Re, Os, Ir, Pt, Au, and Bi), and
Mₙ ≥ ... ≥ M₂ ≥ M₁ ≠ Mₙ
are satisfied, where M₁ is the compositional ratio of the material M in the first information layer, M₂ is the compositional ratio of the material M in the second information layer,..., and Mₙ is the compositional ratio of the material M in the n-th information layer.

11. The optical information recording medium according to Claim 10, wherein the recording layers each contain the material M in an amount of at least 1 atom% and no more than 30 atom%.

12. The optical information recording medium according to Claim 10 or 11, wherein the thickness of the recording layers is at least 1 nm and no more than 50 nm.

13. The optical information recording medium according to Claims 10 to 12, wherein at least one of the first to n-th information layers has a protective layer on the substrate side of the recording layer and/or the opposite side from the substrate side, and
the protective layer is composed of a material with a refractive index n of at least 1.5.

14. The optical information recording medium according to Claim 10 or 13, wherein at least one of the first to n-th information layers has a reflective layer on the substrate side of the recording layer, and the reflective layer is composed of a material whose refractive index n is no more than 2 and whose extinction coefficient k is at least 2.

15. A method for manufacturing the optical information recording medium according to any of Claims 1 to 14,
comprising annealing in which the temperature is held at 60°C or higher for at least 5 minutes after at least the recording layers have been formed.
